# EUROPÄISCHE PATENTSCHRIFT

(11) **EP 0 614 172 B1**
(45) Veröffentlichungstag und Bekanntmachung des Hinweises auf die Patenterteilung: **06.05.1999**
(21) Anmeldenummer: 94200475.5
(22) Anmeldetag: 24.02.1994
(51) Int. Cl.: G10L 5/06

(54) **Verfahren und Anordnung zum Ermitteln von Wörtern in einem Sprachsignal**
Method and device for determining words in a speech signal
Méthode et dispositif de détermination de mots dans un signal de parole

(30) Priorität: 03.03.1993 DE 4306508
(43) Veröffentlichungstag der Anmeldung: 07.09.1994
(73) Patentinhaber: Philips Patentverwaltung GmbH, 22335 Hamburg (DE); Koninklijke Philips Electronics N.V., 5621 BA Eindhoven (NL)
(72) Erfinder: Oerder, Martin, Dr., D-20097 Hamburg (DE)
(74) Vertreter: Volmer, Georg, Dipl.-Ing.

(56) Entgegenhaltungen:
- EP-A- 0 242 743
- EP-A- 0 285 211
- EP-A- 0 299 572
- EP-A- 0 533 259

## Beschreibung

Die Erfindung betrifft ein Verfahren zum Ermitteln einer Folge von Wörtern aus einem vorgegebenen Vokabular in einem Sprachsignal mit folgenden Schritten: zu wiederholten Zeitpunkten wird das Sprachsignal abgetastet, um eine Folge von Testsignalen zu erzeugen; es wird ein signalweiser Vergleich zwischen den Testsignalen und verschiedenen Folgen von Referenzsignalen mit Erzeugung von Bewertungswerten durchgeführt, wobei jede Folge von Referenzsignalen ein Wort des Vokabulars darstellt, der Vergleich wird, ausgehend vom Anfang der verschiedenen Folgen von Referenzsignalen, mit folgenden Testsignalen immer wieder neu begonnen; für jedes erreichte Wortende wird ein Wortergebnis abgeleitet, das wenigstens einen Hinweis auf den Wortanfang dieses beendeten Worts, einen Wort-Bewertungswert und einen Hinweis auf dieses beendete Wort umfaßt; mindestens eine Folge von Wörtern wird aus den Wortergebnissen abgeleitet und die Wörter vom Beginn an nacheinander ausgegeben; sowie eine Anordnung zur Durchführung des Verfahrens.

Ein derartiges Verfahren ist bekannt aus der EP 0 285 211 A2. Dabei entstehen sich verzweigende Wortketten, wobei die Anzahl der Verzweigungen insbesondere bei einem großen Vokabular und langen Sätzen dadurch begrenzt wird, daß die Bewertungswerte regelmäßig mit einem Schwellwert verglichen werden und Folgen, in denen der Bewertungswert den Schwellwert überschreitet, nicht weitergeführt werden. Durch Verwendung eines Sprachmodells beim Vergleich, nämlich bei der Entscheidung, mit welchen Folgen nach jeweils beendeten Wörtern Vergleiche fortgesetzt werden sollen, werden die Verzweigungen weiter reduziert. Die immer wieder neu begonnenen Vergleiche werden nicht unabhängig voneinander geführt, sondern stellen ebenso wie die Vergleiche innerhalb der Folgen von Referenzsignalen Teile von Satzhypothesen dar, die auch rekombinieren können, so daß von Vergleichen, die zu unterschiedlichen, meist eng benachbarten Zeitpunkten bzw. Testsignalen begonnen wurden, nur einer übrig bleibt und zum Wortende führen kann. Von den am Ende des Sprachsignals übrig gebliebenen Zweigen wird derjenige Zweig mit dem besten Bewertungswert am Ende zurückverfolgt, und die Wörter dieses Zweiges werden vom Anfang an ausgegeben.

Dieses Verfahren erfordert insbesondere bei Berücksichtigung des Sprachmodells einen hohen Verarbeitungsaufwand, und die Verwendung des Schwellwerts und des Sprachmodells kann mit ein Grund dafür sein, wenn die tatsächlich gesprochene Wortfolge aus dem Sprachsignal nicht ermittelt wird, da die entsprechende Verzweigung vorher bereits fälschlich beendet wurde.

Aus der US-PS 4,624,008 ist ferner eine Anordnung zur Spracherkennung bekannt, die ein Sprachmodell in Form einer- fest vorgegebenen Syntax verwendet. Bei jedem Wortende wird geprüft, ob das abgeschlossene Wort gemäß der Syntax zu den vorhergehenden Worten paßt, und es wird danach bestimmt, welche Wörter folgen dürfen, und nur mit diesen Wörtern wird der Vergleich fortgesetzt. Ferner wird ständig geprüft, ob ein Satzende gemäß der vorgegebenen Syntax erreicht worden ist. Auch hierbei wird also ständig ein Sprachmodell verwendet, um die Anzahl der bei den Vergleichen entstehenden Hypothesen zu begrenzen.

Aufgabe der Erfindung ist es, ein Verfahren der eingangs genannten Art anzugeben, bei dem der Aufwand für die Suche relativ gering gehalten wird und bei dem dennoch die Wahrscheinlichkeit, daß die richtige Folge von Wörtern während der fortschreitenden Vergleiche fälschlich verloren geht, nur gering ist.

Diese Aufgabe wird erfindungsgemäß dadurch gelöst, daß jeder mit dem Anfang von Folgen von Referenzsignalen neu begonnene Vergleich unabhängig von jedem anderen Vergleich getrennt bis zum Wortende durchgeführt wird, daß mit den Wortergebnissen der Wortenden vorläufige Wortketten gebildet und diese gespeichert werden, indem jedes bei einem momentanen Testsignal beendete Wort jedem seinem Wortanfang unmittelbar vorhergehenden Ende einer vorläufigen Wortkette zur Bildung einer neuen vorläufigen Wortkette angefügt wird, wobei der Wort-Bewertungswert jedes Worts mit dem am Ende der vorläufigen Wortkette erreichten Bewertungswert zu einem neuen Bewertungswert verknüpft wird, von denen der günstigste neue Bewertungswert für einen Anfangs-Bewertungswert für einen unmittelbar danach neu beginnenden Vergleich dient, der vom Anfang der verschiedenen Folgen von Referenzsignalen ausgeht.

Der Gesamterkennungsvorgang wird auf diese Weise also in zwei Abschnitte zerlegt, von denen der erste Abschnitt Wortergebnisse liefert, die unabhängig voneinander gewonnen wurden und aus denen im zweiten Abschnitt dann Satzhypothesen gebildet werden. Im übertragenen Sinne kann dieses Verfahren derart betrachtet werden, daß der erste Abschnitt Worthypothesen erzeugt, die zu einem Wortgraphen zusammengesetzt werden, wobei ein Wortgraph ein gerichteter Graph mit einem Anfangs- und einem Endknoten ist, dessen Kanten Wörter darstellen. Jeder Weg durch den Graphen vom Anfangs- zum Endknoten stellt einen möglichen Satz dar. Jedem Knoten im Graph ist ein Zeitpunkt des Sprachsignals, d.h. also ein bestimmtes Testsignal zugeordnet, und jeder Kante im Graph ist ein Bewertungswert, vorzugsweise eine logarithmierte Wahrscheinlichkeit dafür, daß das betreffende Wort oder Wortteil das zugehörige Teilstück des Sprachsignals erzeugt hat, zugeordnet. Die erfindungsgemäßen Verfahrensschritte entsprechen also einer Erzeugung eines Wortgraphen, und schließlich werden die Wörter wenigstens einer Wortkette vom Beginn an nacheinander ausgegeben. Dies wird allgemein die Wortkette mit dem günstigsten Bewertungswert am Ende sein, es können jedoch auch die Wörter mehrerer Wortketten mit abnehmend günstigstem Bewertungswert ausgegeben werden. Es bleiben nämlich praktisch immer mehrere Wortketten und vor allem auch Verzweigungen von Wortketten erhalten.

Bei einem großen Vokabular und insbesondere bei längeren Sätzen entstehen sehr große Anzahlen von Wortketten, die den Speicherplatzbedarf stark erhöhen können, so daß die Anzahl von Wortketten ständig begrenzt bzw. wieder reduziert werden muß. Dies erfolgt nach einer Ausgestaltung der Erfindung dadurch, daß für jede neue vorläufige Wortkette geprüft wird, ob wenigstens ein Teil dieser Wortkette mit einem Teil einer anderen vorläufigen Wortkette, wobei die Teile bei demselben Testsignal begonnen und beendet wurden, bezüglich der Wortfolge identisch ist, und von identischen Teilen alle zuletzt beendeten Wörter außer dem zuletzt beendeten Wort der vorläufigen Wortkette mit dem günstigsten Bewertungswert gelöscht werden.

Dabei ist berücksichtigt, daß eine Wortgrenze allgemein nicht eindeutig erkennbar ist, sondern bei zwei oder auch mehr aufeinanderfolgenden Testsignalen das Ende desselben Wortes ermittelt wird. Dadurch können Wortketten bzw. Teile davon mit gleicher Wortfolge entstehen, die sich nur durch die Lage der Wortgrenzen unterscheiden.

Außerdem unterscheiden sich solche gleichen Wortfolgen allgemein durch unterschiedliche Bewertungswerte. Dies kann zu einer weiteren Reduzierung der Anzahl Wortketten benutzt werden, indem gemäß einer weiteren Ausgestaltung der Erfindung von allen neuen vorläufigen Wortketten, deren Bewertungswert um mehr als ein vorgegebener Schwellwert ungünstiger ist als der beste Bewertungswert aller vorläufigen Wortketten, die bei dem momentanen Testsignal vorläufig enden, das angefügte Wort gelöscht wird. Dies entspricht dem bekannten Begrenzen der Anzahl von Worthypothesen innerhalb eines Wortes durch Vergleich der Bewertungswerte aller Hypothesen mit einem entsprechenden Schwellwert.

Beide Maßnahmen können auch zusammen angewendet werden und stellen eine sehr wesentliche Optimierung des erzeugten Wortgraphen dar.

Durch die Wahl des vorgegebenen Schwellwertes kann bestimmt werden, wie viele Kanten des Wortgraphen während der Verarbeitung des Sprachsignals gebildet werden, d.h. wie stark der Wortgraph sich aufspaltet. Ein zu kleiner Schwellwert könnte dazu führen, daß unter extremen Umständen derjenige Weg durch den Wortgraphen, der dem tatsächlich gesprochenen Satz entspricht, fälschlich vorzeitig beendet wird, während ein zu großer Schwellwert zu einem zu starken Anwachsen des Wortgraphen führt. Dabei ist zu bemerken, daß während der vorhergehenden Durchführung der Vergleiche von Testsignalen mit Referenzsignalen zweckmäßig ebenfalls in bekannter Weise ein Schwellwert verwendet wird, um die Anzahl der erzeugten Worthypothesen zu begrenzen, wobei dieser Schwellwert bei den Vergleichen unterschiedlich sein kann zum Schwellwert beim Optimieren des Wortgraphen.

Es sei ferner bemerkt, daß die verschiedenen Folgen von Referenzsignalen, die jeweils ein Wort des Vokabulars darstellen, gemeinsame Teile aufweisen können, nämlich wenn die Folgen der Referenzsignale für das Vokabular in Form eines Baums aufgebaut sind, wie dies beispielsweise in der deutschen Patentanmeldung P 41 30 631.7 (PHD 91-138) beschrieben ist. Dadurch kann dieser Vergleich und damit die Erzeugung der Worthypothesen mit weniger Rechenaufwand, d.h. wesentlich schneller durchgeführt werden. Eine weitere Beschleunigung kann erreicht werden, wenn eine Vorabbewertung durchgeführt wird, wie dies in der deutschen Patentanmeldung P 41 30 633.3 (PHD 91-136) beschrieben ist. Dies ist jedoch von der weiteren Verarbeitung der Worthypothesen, nämlich bei der Optimierung des Wortgraphen durch die erfindungsgemäßen Verfahrensschritte, unabhängig.

Die Bildung und Optimierung des Wortgraphen ist grundsätzlich auch ohne Verwendung eines Sprachmodells möglich. Dabei ist es allerdings schwieriger, einen Schwellwert zu finden, der einerseits den Suchaufwand wirksam verringert und andererseits nicht zum Verlust der am Ende optimalen bzw. richtigen Satzhypothese führt. Eine Ausgestaltung der Erfindung ist daher dadurch gekennzeichnet, daß für den Vergleich mit dem Schwellwert ein weiterer Bewertungswert verwendet wird, der aus einer Verknüpfung des neuen Bewertungswerts und einem Sprachmodell-Bewertungswert gebildet wird, der gemäß der Kombination des betreffenden beendeten Worts und wenigstens des letzten Worts der vorläufigen Wortkette, an die das betreffende beendete Wort angefügt wird, aus einem ersten Satz vorgegebener Sprachmodell-Bewertungswerte ausgewählt wird. Dadurch wird beim zweiten Bewertungswert berücksichtigt, daß dieser um so ungünstiger wird, je unwahrscheinlicher die Folge der beispielsweise letzten beiden oder letzten drei Wörter gemäß dem Sprachmodell ist. Als Sprachmodell kann zweckmäßig ein Bigram oder Trigram-Sprachmodell verwendet werden. Es ist sinnvoll, für den weiteren Bewertungswert außer dem Sprachmodell-Bewertungswert nicht den letzten neuen der ohne Verwendung des Sprachmodells ermittelt wurde, zu verwenden, sondern den vorhergehenden weiteren Bewertungswert, bei dem bereits für die vorhergehende Teilwortfolge das Sprachmodell berücksichtigt wurde. Dabei müssen dann für jede vorläufige Wortkette zwei Bewertungswerte mitgeführt werden, nämlich der eine, der für den neuen Bewertungswert und später bei der Ausgabe zur Bestimmung der optimalen Wortfolge, gewünschtenfalls auch unter Berücksichtigung eines komplexeren Sprachmodells, verwendet wird, und ein weiterer Bewertungswert, der für den Vergleich mit dem Schwellwert verwendet wird.

Bei der Erzeugung der Worthypothesen durch Vergleich der Testsignale mit den Folgen von Referenzsignalen werden oft auch kurze Wörter als Ergebnis erzeugt, die mit Teilen eines tatsächlich gesprochenen Wortes übereinstimmen. Um solche kurzen Wörter bei der anschließenden Optimierung des Graphen möglichst bald wieder zu eliminieren, ist es nach einer weiteren Ausgestaltung der Erfindung zweckmäßig, daß für jeden neu begonnenen Vergleich der günstigste Bewertungswert am Ende der vorhergehenden Wortkette mit einem Korrekturwert verknüpft wird. Durch den Korrekturwert, der bei allen Wörtern, d.h. auch bei langen Wörtern, verwendet wird, wird jedoch erreicht, daß eine vorläufige Wortkette mit einer Folge von kurzen Wörtern am Ende einen ungünstigeren Bewertungswert erhält als eine vorläufige Wortkette, die vom selben Zeitpunkt wie die Teilkette kurzer Wörter ausgehend mit beispielsweise einem einzigen langen Wort fortgesetzt wird. Dadurch wird die vorläufige Wortkette mit den vielen kurzen Wörtern leichter den Schwellwert überschreiten und damit beendet werden.

Bei dem erfindungsgemäßen Verfahren spaltet sich praktisch jede vorläufige Wortkette immer wieder weiter auf, so daß der Wortgraph schließlich eine sehr große Anzahl von Kanten und Knoten aufweist, wobei viele Knoten zu denselben Zeitpunkten, d.h. zu denselben Testsignalen gehören. Dies ist eine aufwendige Struktur, die viel Speicherplatz erfordert. Eine weitere Ausgestaltung der Erfindung ist daher dadurch gekennzeichnet, daß bei demselben Testsignal endende Wörter ein gemeinsames Ende von vorläufigen Wortketten bilden und die aus dem unmittelbar nach diesem Ende neu begonnenen Vergleich entstehenden endenden Wörter diesem gemeinsamen Ende angefügt werden, und daß für Wortketten, in denen mehrere Zwischenwörter oder Zwischenwortfolgen bei demselben einen Testsignal begonnen und bei demselben anderen Testsignal beendet wurden, wobei der nach diesem anderen Testsignal neu begonnene Vergleich nicht mit wenigstens einer Folge von Referenzsignalen noch fortgesetzt wird, für jedes dieser Zwischenwörter oder Zwischenwortfolgen zumindest die Wort-Bewertungswerte bis zum zuletzt beendeten Wort zu einem Zwischen-Bewertungswert verknüpft werden und das Zwischenwort bzw. die Zwischenwortfolge gelöscht wird, wenn der Zwischen-Bewertungswert den Schwellwert überschreitet. Insbesondere wenn alle Wortketten, die bei demselben Testsignal enden bzw. eine Wortgrenze haben, zusammengelegt werden, ergibt sich eine wesentlich einfachere Darstellung des Wortgraphen. Dieses Zusammenlegen von Punkten inner¶ halb vorläufiger Wortketten kann insbesondere rückwirkend vorgenommen werden, wenn nämlich feststeht, daß keiner der Vergleiche, der unmittelbar nach diesem Zeitpunkt bzw. diesem Testsignal begonnen würde, noch aktiv ist. Falls bei diesem Zusammenlegen von gleichzeitigen Enden bzw. Knoten von vorläufigen Wortketten Teile auftreten, die insbesondere über mehrere Wörter gleiche Wortfolgen und gleiche Anfangs- und Endpunkte aufweisen, können alle solche Teile außer dem Teil mit dem besten Bewertungswert gelöscht werden. Bei dem Zusammenlegen von gleichzeitigen Enden von vorläufigen Wortketten, die im Wortgraphen also isochrone Knoten darstellen, entsteht ein Wortgraph mit mehreren parallelen Pfaden zwischen zwei Knoten, die verschiedenen Wörtern zwischen diesen beiden Knoten oder, wenn sich diese parallelen Wege über mehrere Knoten erstrecken, verschiedenen Zwischenwortfolgen aus mehreren Wörtern entsprechen. Die Fortsetzung nach der Vereinigung solcher parallelen Zwischenwörter oder Zwischenwortfolgen erfolgt jedoch gemäß dem bisher beschriebenen Verfahren mit dem günstigsten Bewertungswert dieser Zwischenwörter oder Zwischenwortfolgen. Wenn zu einem späteren Zeitpunkt die Fortsetzungen der Wortketten bzw. des Wortgraphen aus diesem Vereinigungspunkt festliegen, d.h. es können keine neuen Fortsetzungen mehr auftreten, weil der Vergleich mit allen unmittelbar nach dem Vereinigungspunkt begonnenen Folgen endgültig beendet ist, kann zu diesem späteren Zeitpunkt der Bewertungswert am Ende einer vorläufigen Wortkette, die über diesen Vereinigungspunkt verläuft, noch unterhalb des Schwellwerts liegen, jedoch der Weg über ein anderes der Zwischenwörter oder eine andere der Zwischenwortfolgen, die am Vereinigungspunkt einen höheren Bewertungswert ergibt, würde zu dem späteren Zeitpunkt den Schwellwert überschreiten. Wenn dies der Fall ist, kann die weitere Verarbeitung beschleunigt werden, indem der Wortgraph rückwirkend durch die Zwischen-Bewertungswerte und den Schwellwertvergleich wieder vereinfacht wird. Auf diese Weise entsteht ein Wortgraph, bei dem die Bewertungswerte jeder der möglichen Wege innerhalb des Schwellwerts liegen. Dabei kann für jeden dieser Wege, wie vorher beschrieben, für den Bewertungswert ein Sprachmodell verwendet werden.

Wenn beim Optimieren des Wortgraphen ein zuletzt eingefügtes Wort einer vorläufigen Wortkette gelöscht wird, entweder aufgrund einer identischen Wortfolge mit günstigerem Bewertungswert oder weil mit diesem Wort der Schwellwert überschritten wird, kann der Fall auftreten, daß dasjenige Ende einer vorläufigen Wortkette, an dem das zuletzt angefügte Wort gelöscht wurde, nicht mehr mit einem anderen Wort fortgesetzt wird, sondern ohne Fortsetzung endet. Solche quasi offenen Enden von vorläufigen Wortketten beeinträchtigen zwar nicht grundsätzlich den gesamten Erkennungsvorgang bzw. die Ausgabe der Wörter einer Wortkette als Ergebnis, vergrößern jedoch unnötig den Wortgraphen und erfordern damit mehr Aufwand beim Speichern der einzelnen Wortketten und bei deren Ausgabe. Eine weitere Ausgestaltung der Erfindung ist daher dadurch gekennzeichnet, daß jeder Teil einer Wortkette, an dessen Ende nicht wenigstens ein Wort angefügt ist und bei dem der nach diesem Ende neu begonnene Vergleich mit nicht wenigstens einer Folge von Referenzsignalen fortgesetzt wird, gelöscht wird. Voraussetzung dafür, daß eine nicht fortgesetzte und nicht verzweigte vorläufige Wortkette gelöscht werden kann, ist die Tatsache, daß der Vergleich von Testsignalen mit Anfängen von Folgen von Referenzsignalen, der unmittelbar nach diesem offenen Ende der Wortkette begonnen wurde, nicht mehr aktiv ist, d.h. in den Folgen von Referenzsignalen, die zu dem Zeitpunkt unmittelbar nach dem Ende der nicht fortgesetzten Wortkette begonnen wurden, finden keine Vergleiche mehr statt, insbesondere weil alle begonnenen Folgen den beim Vergleich verwendeten Schwellwert bereits überschritten hatten. Diese Voraussetzung ist notwendig, damit es nicht geschehen kann, daß ein später beendetes und ausgegebenes längeres Wort einen vorher noch möglichen Zusammenhang mit der Vergangenheit verliert.

Bei der Ausgabe der Folge der Wörter einer.Wortkette wird, wenn insbesondere nur eine Folge ausgegeben werden soll, die Wortkette mit dem günstigsten Bewertungswert ausgewählt. Dies kann am Ende eines Satzes geschehen, jedoch ist es bei längeren Sätzen auch möglich, schon vor dem Satzende mit der Ausgabe desjenigen Teils der Wortfolge zu beginnen, der in seinem Verlauf und mit seinen Bewertungswerten gegenüber allen anderen Wortfolgen bereits festliegt. Dabei kann der Bewertungswert verwendet werden, der bei der Bildung des Wortgraphen verwendet wird oder besser noch der weitere Bewertungswert, der nach einer der Ausgestaltungen des erfindungsgemäßen Verfahrens für den Vergleich mit dem Schwellwert verwendet wird. Da ein Wortgraph, der nach dem bisher beschriebenen Verfahren stark optimiert wurde, nur eine relativ begrenzte Anzahl von Kanten entsprechend Wörtern aufweist, deren Folge festliegt, kann auch ein komplexeres Sprachmodell verwendet werden. Eine weitere Ausgestaltung der Erfindung ist daher dadurch gekennzeichnet, daß spätestens am Ende des Sprachsignals für alle nicht gelöschten Wortketten aus den Wort-Bewertungswerten der Wörter in jeder Kette und Sprachmodell-Bewertungswerten, die für zusammenhängende Teile der Wortketten aus einem zweiten Satz vorgegebener Sprachmodellwerte entnommen werden, End-Bewertungswerte bestimmt werden und die Wörter zumindest der Wortkette mit dem günstigsten End-Bewertungswert von Beginn dieser Kette an nacheinander ausgegeben werden. Für die Ausgabe der Folge von Wörtern bzw. für die Auswahl der Wortkette für die Ausgabe mit dem günstigsten Bewertungswert wird dann also ein Bewertungswert verwendet, der unter Berücksichtigung eines komplexen Sprachmodells ermittelt wurde, was aufgrund der begrenzten Anzahl von Wörtern mit relativ wenig Aufwand möglich ist. Dieser für die Ausgabe ermittelte Bewertungswert wird sich durchaus von dem Bewertungswert für die Erzeugung des Graphens unterscheiden, wobei sich dann durchaus auch die Reihenfolge der Wortfolgen gemäß ihrer Bewertungswerte verändern kann. Dadurch kann eine größere Genauigkeit bei der Ermittlung der tatsächlich gesprochenen Wortfolge erreicht werden.

Trotz aller Optimierung kann es insbesondere bei einem sehr großen Wortschatz dennoch sein, daß die ermittelte Wortfolge von der tatsächlichen Wortfolge abweicht, beispielsweise durch ähnlich klingende Wörter, die nach dem Sprachmodell jedoch gleichwertig sind. Für die Ausgabe z.B. in Form eines Ausdrucks auf Papier ist es daher allgemein erforderlich, noch eine Nachbearbeitung vorzunehmen. Eine solche Nachbearbeitung ist unter Verwendung des nach dem bisher beschriebenen Verfahren ermittelten Wortgraphen besonders günstig möglich. Eine Ausgestaltung der Erfindung ist dafür dadurch gekennzeichnet, daß beim Ausgeben der Wörter einer Wortkette vom Beginn an für verschiedene Wörter innerhalb dieser Wortkette mehrere diesem Wort folgende, bei der Bildung der vorläufigen Wortketten angefügte und nicht gelöschte Wörter auswählbar sind und die ausgegebene Wortkette in jedem solchen Fall mit dem ausgewählten Wort fortgesetzt wird, indem die auswählbaren Wörter in der Reihenfolge der Bewertungswerte, die die bisher ausgegebene Wortkette einschließlich der auswählbaren Wörter ergeben, ausgegeben werden. Diese Ausgestaltung geht von der Erkenntnis aus, daß das tatsächlich gesprochene Wort sich mit sehr großer Wahrscheinlichkeit unter den erkannten Wörtern befindet, jedoch durch kleine Ausspracheschwankungen nicht im optimalen Pfad im Wortgraphen liegt. Wenn nun beispielsweise das tatsächlich gesprochene und gespeicherte Sprachsignal wieder abgegeben wird und gleichzeitig an einem Bildschirm die als wahrscheinlichste erkannte Wortfolge wortweise nacheinander angezeigt wird, kann beim Feststellen eines falsch ausgegebenen Wortes die Ausgabe angehalten werden. Für dieses Wort wird dann an einer anderen Stelle des Bildschirms eine Liste von anderen Wörtern angezeigt, die in dem Wortgraphen vom selben Punkt wie das falsch ausgegebene Wort ausgehen. Durch die Ausgabe dieser anderen Wörter gemäß deren Bewertungswerte kann die Bedienungsperson dann sehr schnell das richtige unter diesen Wörtern auswählen und die Ausgabe fortsetzen. Dadurch ist eine sehr schnelle und einfache Änderung der ausgegebenen Wortfolge möglich.

Da es bei der Auswahl eines anderen als desjenigen Worts, das bei dem Wortgraphen im optimalen Weg liegt, sich die Fortsetzung auch ändern kann, da von einem Knoten im Wortgraphen ausgehende Kanten in verschiedener Folge weiterlaufen können, ist es nach einer weiteren Ausgestaltung der Erfindung zweckmäßig, daß nach Auswahl eines anderen Worts neue End-Bewertungswerte ermittelt werden, die mindestens von dem ausgewählten Wort ausgehen, und nachfolgend die Wörter derjenigen Wortkette, die von diesem ausgewählten Wort ausgehend den günstigsten End-Bewertungswert ergibt, nacheinander ausgegeben werden. Es wird also bei einer Änderung die Fortsetzung gemäß dieser Änderung neu mit Hilfe des Sprachmodells bestimmt, so daß auf diese Weise die Wahrscheinlichkeit, daß weitere falsche Wörter ausgegeben werden, noch weiter verringert wird.

Eine Anordnung zur Durchführung des erfindungsgemäßen Verfahrens mit Mitteln zum Aufnehmen eines akustischen Signals und zum Erzeugen einer Folge von Testsignalen, Mitteln zum Speichern von Folgen von Referenzsignalen, die Wörtern entsprechen, Mitteln zum Vergleichen der Folgen von Testsignalen mit den Folgen von Referenzsignalen, Mitteln zum Erzeugen von Wortergebnissen, die Bewertungswerte und Hinweisdaten umfassen, und Mitteln zum Ausgeben wenigstens einer Folge von Wörtern, ist gemäß der Erfindung gekennzeichnet durch Mittel zum Erzeugen von vorläufigen Wortketten aus den Wortergebnissen, Mittel zum Speichern der vorläufigen Wortketten, Mittel zum Vergleichen der gespeicherten vorläufigen Wortketten miteinander und zum Vergleichen der Bewertungswerte der gespeicherten vorläufigen Wortketten mit einem Schwellwert und zum Löschen wenigstens der letzten Wörter von gespeicherten vorläufigen Wortketten in Abhängigkeit von dem Ergebnis des Vergleichs. Die erfindungsgemäße Anordnung besteht somit im wesentlichen aus zwei Abschnitten, von denen der erste Abschnitt im wesentlichen nur die Erzeugung der einzelnen Worthypothesen umfaßt, und zwar für aufeinanderfolgende Startzeitpunkte getrennt und unabhängig voneinander. Dies erfolgt in an sich bekannter Weise nach der Methode der dynamischen Programmierung zur Suche des besten Pfades innerhalb der Wörter. Die dafür notwendigen Verarbeitungsschritte sind sehr zeitaufwendig, und es ist bekannt, zur Beschleunigung dabei Schwellwertvergleiche bei der Erzeugung der einzelnen Worthypothesen anzuwenden sowie insbesondere bei einem großen Vokabular eine Vorabbewertung, durch die die folgenden Testsignale nur mit einem kleinen Teil der Folgen von Referenzsignalen verglichen werden. Die Referenzsignale für das Vokabular können im übrigen, wie ebenfalls bereits bekannt, als Baum aufgebaut sein, d.h. Teile von Folgen von Referenzsignalen sind mehreren Wörtern gemeinsam. Es erfolgt jedoch keine Berücksichtigung eines Sprachmodells, da in diesem Abschnitt nur die einzelnen Worthypothesen für sich ohne Zusammenhang mit anderen Worthypothesen erzeugt werden.

Dieser Zusammenhang wird vielmehr erst im nächsten Abschnitt hergestellt, wo also vorläufige Wortketten erzeugt und optimiert werden, wie dies vorstehend bereits angedeutet wurde. Dieser Abschnitt erfordert auch bei einer großen Anzahl von Worthypothesen verhältnismäßig wenig Rechenaufwand, selbst wenn die Optimierung umfangreich und relativ kompliziert erfolgt. Durch die erfindungsgemäße Aufteilung der gesamten Vorgänge auf zwei im wesentlichen voneinander unabhängige Abschnitte der gesamten Anordnung ist eine sehr effektive und zeitsparende Verarbeitung möglich.

Da es durchaus möglich ist, die von der erfindungsgemäßen Anordnung als optimal ermittelte Wortkette doch nicht die richtige ist, wird zweckmäßig eine interaktive Nachbearbeitung angefügt. Eine Ausgestaltung der erfindungsgemäßen Anordnung ist daher gekennzeichnet durch Mittel zum Empfangen eines ersten Steuersignals und zum Ausgeben von mehreren Wörtern aus Wortketten als Reaktion auf das erste Steuersignal, Mittel zum Empfangen eines zweiten Steuersignals und zum Auswählen eines von den mehreren ausgegebenen Wörtern. Die Steuersignale werden durch eine Bedienungsperson beispielsweise durch Tastenbetätigung erzeugt, während die erkannte Wortfolge auf einem Bildschirm angezeigt wird. Dies ermöglicht eine sehr wirksame Nachbearbeitung der erkannten Wortfolge.

Ausführungsbeispiele der Erfindung werden nachstehend anhand der Zeichnung näher erläutert.

Es zeigen
Fig. 1 ein schematisches Blockschaltbild einer erfindungsgemäßen Anordnung,
Fig. 2 ein Diagramm zur Erläuterung der Erzeugung der einzelnen Worthypothesen,
Fig. 3 schematisch ein Wortgraph zur Erläuterung der Optimierung der aus den Worthypothesen gebildeten vorläufigen Wortketten,
Fig. 4 das Prinzip des Eliminierens von parallelen Teilen von Wortketten,
Fig. 5 das Löschen von Teilen von Wortketten beim Vergleich mit einem Schwellwert,
Fig. 6 schematisch anhand eines Wortgraphen die Zusammenfassung von zeitgleichen Punkten von verschiedenen vorläufigen Wortketten.

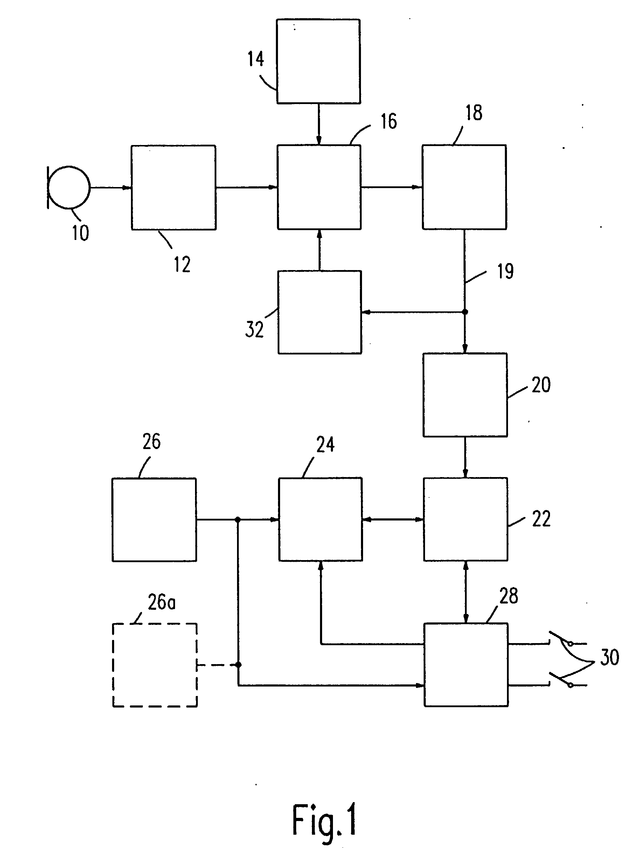

Bei der in Fig. 1 dargestellten Anordnung wird ein akustisches Signal von einem Mikrofon 10 aufgenommen und in ein elektrisches Signal umgewandelt und in dem Block 12 vorzugsweise zu regelmäßigen Zeitpunkten abgetastet und in eine Folge von Testsignalen umgesetzt. Jedes Testsignal charakterisiert einen Zeitabschnitt des Sprachsignals, beispielsweise einen Abschnitt von 10 ms Dauer, über eine Vielzahl von Parametern, und im Block 16 werden diese Testsignale mit Referenzsignalen aus einem Speicher 14 verglichen und Abstandswerte bestimmt. Dieser Vergleich erfolgt üblicherweise nach der Methode der dynamischen Programmierung. In dem Speicher 14 sind die Referenzwerte als Folgen enthalten, wobei jeweils eine Folge wenigstens einem Wort des Vokabulars entspricht. Wenn die Referenzsignale des Vokabulars als Baum aufgebaut sind, sind Teile der Folgen für mehrere Worte gemeinsam.

Immer dann, wenn ein Wortende erreicht worden ist, d.h. das letzte Referenzsignal einer Folge mit einem Testsignal verglichen wird, wird ein Wortergebnis abgegeben, das einen Wort-Bewertungswert aus akkumulierten Abstandswerten umfaßt, ferner einen Hinweis auf das beendete Wort, der beispielsweise aus einer Nummer dieses Wortes innerhalb einer Vokabularliste bestehen kann, sowie einen Hinweis auf den Anfangs- und Endpunkt des Wortes, wobei diese Punkte beispielsweise als Nummern des Testsignals ausgedrückt werden können, bei dem die Folge von Referenzsignalen entsprechend diesem Wort begonnen wurde und bei dem diese Folge beendet wurde, d.h. also die Nummer des aktuellen Testsignals. Diese Ausgabe der in dem Block 18 erzeugten Wortergebnisse geschieht am Ausgang 19.

Der Bewertungswert des beendeten Wortes am Ausgang 19 dient nun als Anfangs-Bewertungswert für einen unmittelbar anschließend neu zu beginnenden Vergleich im Block 16 für die folgenden Testsignale mit Anfängen von Folgen von Referenzsignalen aus dem Speicher 14. Der Wort-Bewertungswert wird zweckmäßig aus der Differenz zwischen dem Anfangs-Bewertungswert und dem Bewertungswert am Ende des Wortes bestimmt. Wenn bei einem Testsignal gleichzeitig die Enden von mehreren Wörtern erreicht werden, wird der folgende Vergleich mit dem günstigsten Bewertungswert aller dieser beendeten Wörter als Anfangs-Bewertungswert begonnen. Auf diese Weise wird erreicht, daß die momentanen Bewertungswerte aller Vergleiche, die zu verschiedenen Zeitpunkten bzw. mit verschiedenen Testsignalen begonnen wurden, tatsächlich vergleichbar sind und bei Verwendung eines Schwellwertvergleichs innerhalb der Erzeugung der Worthypothesen für diese alle ein einheitlicher Schwellwert verwendet werden kann, der aus dem minimalen momentanen Bewertungswert aller Worthypothesen abgeleitet werden kann. Dieser minimale Bewertungswert ist dann nämlich derjenige des besten Pfades vom Satzanfang an bis zum momentanen Testsignal.

Um zu verhindern, daß viele kurze Wörter ausgegeben werden, die ja häufig als Teile in langen Wörtern enthalten sind, wird bei jedem solchen neu begonnenen Vergleich im Block 32 zu dem günstigsten Bewertungswert aller Wörter ein Korrekturwert hinzugerechnet, der entweder einen für alle Wörter gleichen festen Wert darstellt oder von der Unigram-Wahrscheinlichkeit des betreffenden Wortes, das den günstigsten Bewertungswert gezeigt hat, abhängt. Auf diese Weise erreichen Folgen von kurzen Wörtern sehr schnell ungünstige Bewertungswerte. Wenn, wie erwähnt, beim Vergleich im Block 16 außerdem ein Schwellwert berücksichtigt wird, der vom günstigsten Bewertungswert aller Vergleiche in jedem Augenblick abhängt, werden solche Folgen von kurzen Wörtern auf diesem Wege bald beendet.

Bei einem großen Vokabular wird praktisch mit jedem der aufeinander folgenden Testsignale ein oder mehrere Wortenden erreicht. Es hat sich nun herausgestellt, daß es nicht erforderlich ist, mit jedem Wortende einen neuen Vergleich mit Anfängen von Folgen von Referenzwerten zu starten, sondern es ist ausreichend, beispielsweise mit jedem dritten Testsignal einen neuen Vergleich mit Anfängen von Folgen von Referenzsignalen zu beginnen. Dies reduziert den Vergleichsaufwand ohne wesentliche Erhöhung der Erkennungsfehler.

Die am Ausgang 19 auftretenden Wortergebnisse werden außerdem dem Block 20 zugeführt, in dem vorläufige Wortketten gebildet werden. Dazu wird zu jedem beendeten Wort angegeben, welche Wörter seinem Anfang unmittelbar vorausgingen und welche Wörter gleichzeitig geendet haben. Es wird also eine verkettete Datenstruktur der beendeten Wörter gebildet und im Speicher 22 abgespeichert. Ferner werden für die Wörter im Speicher 22, für die ein oder mehrere nachfolgende Wörter beendet worden sind, deren Daten vermerkt. Auf diese Weise läßt sich jede vorläufige Wortkette in beiden Richtungen jederzeit verfolgen.

Nach jedem neu in den Speicher 22 eingeschriebenen Wort mit den entsprechenden Daten wird vom Block 24 geprüft, ob eine durch dieses Wort verlängerte vorläufige Wortkette Teile enthält, die bereits in gleicher Form in einer anderen vorläufigen Wortkette vorhanden sind. In gleicher Form bedeutet, daß dieser Teil der beiden Wortketten zum gleichen Zeitpunkt begonnen haben muß und die gleiche Folge von Wörtern enthält. Dies kann durchaus häufig auftreten, da beispielsweise eine Folge von zwei oder mehr Wörtern mit etwas unterschiedlichen Wortgrenzen zwischen diesen einzelnen Wörtern entstehen kann. Diese übereinstimmenden Wortfolgen werden allerdings aufgrund der unterschiedlichen Wortgrenzen auch unterschiedliche Bewertungswerte aufweisen. Wenn solche Wortfolgen mit Anfangs- und Endzeitpunkt übereinstimmen, könnte bei getrennter Weiterverfolgung dieser vorläufigen Wortketten ein ungünstigerer Bewertungswert einer Wortkette später nie mehr günstiger werden als ein günstigerer Bewertungswert einer anderen gleichen Wortkette. Daher werden bei solchen übereinstimmenden Teilen von Wortketten die letzten Wörter aller Wortketten mit ungünstigerem Bewertungswert gelöscht. Eine weitergehende Löschung von weiteren in der Vergangenheit liegenden Wörtern ist jedoch nicht ohne weiteres möglich, sondern nur dann, wenn sicher ist, daß ein nach dem Vorgängerwort begonnener Vergleich nicht mehr aktiv ist, denn sonst könnte dieses Vorgängerwort noch mit anderen Wörtern fortgesetzt werden, so daß es erhalten bleiben muß.

Außerdem wird für jedes in den Speicher 22 neu eingeschriebene Wort, das üblicherweise zur Fortsetzung mehrerer vorläufiger Wortketten verwendet wird, darauf geprüft, ob eine dieser so fortgesetzten vorläufigen Wortketten einen neuen Bewertungswert erhält, der um einen vorgegebenen Schwellwert ungünstiger als alle zu diesem Zeitpunkt vorhandenen Bewertungswerte ist. Da es sich bei den Bewertungswerten üblicherweise um die logarithmierten Wahrscheinlichkeiten der einzelnen Wörter handelt, so daß die Bewertungswerte unmittelbar addiert werden können, ist ein linearer Vergleich mit einem vom günstigsten Bewertungswert abgeleiteten Schwellwert leicht möglich.

Für den Vergleich mit einem Schwellwert können die direkt über die Leitung 19 zugeführten Bewertungswerte verwendet werden. Es kann aber auch für die Wortfolgen der einzelnen vorläufigen Wortketten anhand der im Speicher 22 enthaltenen verketteten Datenstruktur ein Sprachmodell berücksichtigt werden, das die Wahrscheinlichkeiten von Folgen von zwei oder mehr Wörtern berücksichtigt, um einen weiteren Bewertungswert zu erhalten, der mit dem Schwellwert verglichen wird. Diese Wahrscheinlichkeiten von Wortkombinationen sind in einem Sprachmodellspeicher 26 enthalten und aufgrund von Textuntersuchungen gewonnen worden. Da der Vergleich mit dem Schwellwert nicht so kritisch ist, wenn dieser Schwellwert mit genügendem Abstand vom besten der weiteren Bewertungswerte gewählt wird, genügt für den Vergleich mit dem Schwellwert allgemein ein Sprachmodell, das nur Kombinationen von zwei Wörtern berücksichtigt, d.h. also ein Bigram-Sprachmodell. Der weitere Bewertungswert muß dann ebenfalls bei jeder vorläufigen Wortkette bzw. bei dem betreffenden Wort im Speicher 22 gespeichert werden, um damit bei der nächsten Verlängerung der vorläufigen Wortketten den neuen weiteren Bewertungswert zu errechnen.

Spätestens am Ende eines Satzes erfolgt nun die Ausgabe der Folge der Wörter wenigstens einer Wortkette. Dazu werden die Bewertungswerte aller Wörter aller Wortketten, die noch im Speicher 22 vorhanden sind, aufsummiert, wobei wieder zweckmäßig ein Sprachmodell verwendet wird, und zwar im einfachsten Fall das im Speicher 26 enthaltene Sprachmodell für jeweils Kombinationen von zwei Wörtern. Dies geschieht im Block 28. Es ist jedoch auch möglich, da die Anzahl der verschiedenen Wortketten begrenzt ist, komplexere Sprachmodelle zu verwenden, die in einem gesonderten Speicher 26a enthalten sein können, da der Zeitaufwand für die Berücksichtigung eines komplexeren Sprachmodells gering ist gegenüber dem Zeitaufwand, der für die Erkennung der einzelnen Wörter in den Blöcken 16 und 18 erforderlich ist. Die Folge der Wörter derjenigen Wortkette, die dabei den günstigsten Bewertungswert hat, wird im Block 28 beispielsweise auf einem Bildschirm ausgegeben oder ausgedruckt.

Es sei bemerkt, daß insbesondere bei längeren Sätzen die Ausgabe schon vorher beginnen kann, nämlich sobald der Anfang von vorläufigen Wortketten endgültig festliegt, weil keine der Worthypothesen, die während dieses Anfangsteils der vorläufigen Wortkette begonnen wurden, mehr aktiv sind.

Da es jedoch möglich ist, daß die Wortkette mit dem günstigsten Bewertungswert nicht die Folge der gesprochenen Wörter genau wiedergibt, kann es zweckmäßig sein, nicht nur die Wortkette mit dem günstigsten Bewertungswert, sondern mehrere Wortketten mit zunehmend ungünstigerem Bewertungswert auszugeben, aus denen dann der richtige Satz ausgewählt werden kann.

Noch günstiger ist es, da die Wortketten nach den meisten der Wörter innerhalb der Wortkette Verzweigungen auf mehrere verschiedene Wörter zur Fortsetzung aufweisen, bei der Ausgabe eines falschen Wortes auf dem Bildschirm die weitere Ausgabe zu stoppen, beispielsweise durch Betätigung eines der Tastenschalter 30, und abhängig davon automatisch alle anderen Wörter, die von demselben Punkt der Wortkette abzweigen wie das zuletzt ausgegebene Wort, an einer anderen Stelle des Bildschirms in Form eines Menüs anzuzeigen. Zweckmäßig wird auch das vom Mikrofon 10 aufgenommene Sprachsignal gespeichert und parallel zu den auf dem Bildschirm ausgegebenen Satz akustisch wiedergegeben. Die Bedienungsperson kann dann durch Betätigung eines weiteren Tastenschalters 30 eines dieser zusätzlich angezeigten Wörter, die zweckmäßig in der Reihenfolge ihrer Bewertungswerte listenmäßig angezeigt werden, auswählen. Wenn dann durch weitere Betätigung des ersten Tastenschalters die Ausgabe fortgesetzt wird, erfolgt diese Ausgabe ausgehend von dem Ende des ausgewählten Wortes, wobei sich diese Fortsetzung häufig von der Fortsetzung des falsch wiedergegebenen Wortes unterscheiden wird. Da die Fortsetzung vom Ende des ausgewählten Wortes ebenfalls meistens mehrere Wege umfaßt, wird zweckmäßigerweise vor der Fortsetzung mittels des Sprachmodells unter diesen Fortsetzungen die optimale ausgewählt. Dadurch erfolgt dann laufend bei jeder Änderung eine optimale Anpassung an diese Änderung.

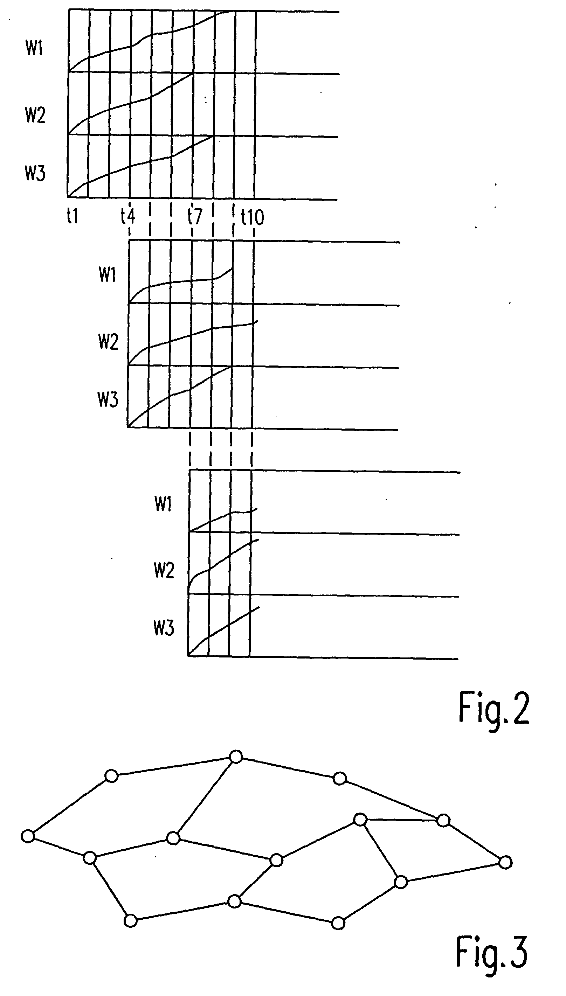

In dem Diagramm in Fig. 2 ist dargestellt, wie die wiederholt mit Anfängen von Folgen von Referenzsignalen begonnenen Vergleiche von Testsignalen mit Referenzsignalen verlaufen. Die waagerechte Achse ist die Zeitachse, über der gleichzeitig die Folge der Testsignale aufgetragen ist. Jede senkrechte Linie entspricht einem Testsignal, von denen der Übersichtlichkeit halber nur jedes dritte Testsignal mit t1, t4, t7 bzw. t10 bezeichnet ist.

In der senkrechten Achse sind die Folgen von Referenzsignalen der einzelnen Wörter aufgetragen, und zwar hier beispielsweise nur für drei Wörter W1, W2 und W3. Die einzelnen Referenzsignale innerhalb der Wörter sind nicht näher bezeichnet.

Das Testsignal zum Zeitpunkt t1 wird nun mit den ersten Referenzsignalen der drei Folgen von Referenzsignalen, d.h. der drei Wörter verglichen, und die folgenden beiden Testsignale mit den weiteren Referenzsignalen am Anfang der Wörter. Bei Verwendung der Methode der dynamischen Programmierung entstehen dann Pfade durch die Gitter von Testsignalen und Referenzsignalen, wie dargestellt ist. Mit dem Testsignal zum Zeitpunkt t4 und den folgenden Testsignalen werden diese Wege weiterverfolgt, gleichzeitig wird das Testsignal zum Zeitpunkt t4 aber auch wieder mit den ersten Referenzsignalen aller drei Wörter W1 bis W3 verglichen.

Mit dem Testsignal zum Zeitpunkt t7 ist zum einen das Wortende des Wortes W2 erreicht, und außerdem beginnt, wie unten in Fig. 2 dargestellt, erneut wieder ein Vergleich mit den ersten Referenzsignalen aller drei Wörter W1 bis W3, während andere, noch aktive Pfade weitergeführt werden.

Die zum Zeitpunkt t4 und t7 und die nicht dargestellten, später neu begonnenen Vergleiche werden unabhängig voneinander durchgeführt, d.h. die zu verschiedenen Zeitpunkten begonnenen Pfade werden jeder für sich bis zum Wortende weiterverfolgt, sofern nicht einige der Pfade vorher durch Vergleich mit einem Schwellwert beendet werden; es erfolgt auf keinen Fall eine Rekombination von Pfaden im selben Wort, die zu verschiedenen Zeitpunkten begonnen wurden.

Mit den nach t7 folgenden Testsignalen werden weitere Wortenden erreicht, während beispielsweise der Pfad im Wort W1, der zum Zeitpunkt t4 begonnen wurde, durch den Vergleich der aufsummierten Abstandswerte längs des Pfades mit einem Schwellwert abgebrochen wird. Aus den aufsummierten Abstandswerten werden im übrigen bei Erreichen eines Wortendes die Bewertungswerte für dieses Wortende abgeleitet. Dabei geht die Aufsummierung stets von einem Anfangs-Bewertungswert aus, der von dem günstigsten Bewertungswert der unmittelbar vor dem Zeitpunkt t4 bzw. t7 beendeten Wörter abgeleitet ist. Der Wort-Bewertungswert, der die Ähnlichkeit des betreffenden Sprachabschnittes mit dem verglichenen Wort, d.h. mit der verglichenen Folge von Referenzsignalen angibt, ist dann die Differenz der Bewertungswerte am Anfang und am Ende des Wortes.

Es sei darauf hingewiesen, daß die Fig. 2 nur eine sehr vereinfachte Darstellung der tatsächlichen Verhältnisse ist, tatsächlich laufen in den einzelnen Wörtern eine Vielzahl von Pfaden parallel zueinander, und die Anzahl der Wörter ist in der Praxis selbstverständlich sehr viel größer. Gewisse Abweichungen ergeben sich auch, wenn die Referenzsignale der einzelnen Wörter des Vokabulars in Form eines Baumes angeordnet sind, jedoch laufen auch dann Vergleiche von Testsignalen mit verschiedenen Bereichen des Baumes parallel ab, und es werden ständig Knoten in diesem Baum entsprechend Wortenden erreicht.

Wie anhand der Fig. 2 zu erkennen ist, werden die Wortenden zunächst unabhängig voneinander erzeugt. Aus diesen Wortenden werden nun vorläufige Wortketten erzeugt, die mit Hilfe eines Wortgraphen dargestellt werden können. Ein sehr vereinfachtes Beispiel für einen Wortgraphen ist in Fig. 3 dargestellt, und er bildet einen gerichteten Graphen mit einem Anfangsknoten und einem Endknoten, dessen Kanten Wörter darstellen. Jeder Weg durch den Graphen vom Anfangsknoten zum Endknoten stellt einen möglichen Satz dar. Jedem Knoten im Graph ist ein Zeitpunkt, d.h. ein Testsignal zugeordnet, wobei senkrecht übereinander liegende Knoten demselben Testsignal zugeordnet sein mögen. Jeder Kante ist eine Wortidentität zugeordnet und ein Bewertungswert, der üblicherweise eine logarithmierte Wahrscheinlichkeit dafür darstellt, daß das betreffende Wort das zugehörige Teilstück des Sprachsignals erzeugt hat.

Wie aus Fig. 3 zu erkennen ist, weisen einige Knoten in dem Graphen Verzweigungen auf, während an anderen Knoten sich mehrere Kanten vereinigen. Solche Knoten gehören dann zu zwei verschiedenen möglichen Wegen durch den Graph.

In der Praxis ist ein derartiger Graph bezogen auf eine Spracherkennung mit einem großen Vokabular selbstverständlich sehr viel umfangreicher, insbesondere wenn zunächst alle Wörter zur Bildung vorläufiger Wortketten verwendet werden, die bei der Worthypothesenerzeugung durch den Vergleichsvorgang gemäß Fig. 2 erzeugt werden. Eine vorläufige Wortkette ist dabei jeweils ein Teil des Graphen vom Anfangsknoten bis zu dem Knoten entsprechend dem momentanen Testsignal. Es ist also notwendig, den Graphen bzw. die dadurch beschriebenen Wortketten wesentlich zu vereinfachen, bevor aus diesen Wortketten eine zur Ausgabe ausgewählt werden kann. Eine Wortkette ergibt sich dadurch, daß zu jedem Wort entsprechend einer Kante im Graphen Daten für alle unmittelbar vorhergehenden Wörter entsprechend den Kanten im Graphen, die sich im Knoten entsprechend dem Anfang dieses Wortes vereinigen, und alle nachfolgenden Wörter entsprechend den Kanten im Graphen, in denen sich der Knoten am Ende des betreffenden Wortes fortsetzt, gespeichert werden und außerdem die Daten für diejenigen Wörter, die im Graphen dem gleichen Knoten entspringen wie das betreffende Wort. Dadurch kann jeder Weg durch den Graphen in beiden Richtungen verfolgt werden, und außerdem sind an jedem Knoten alle Verzweigungen bestimmbar.

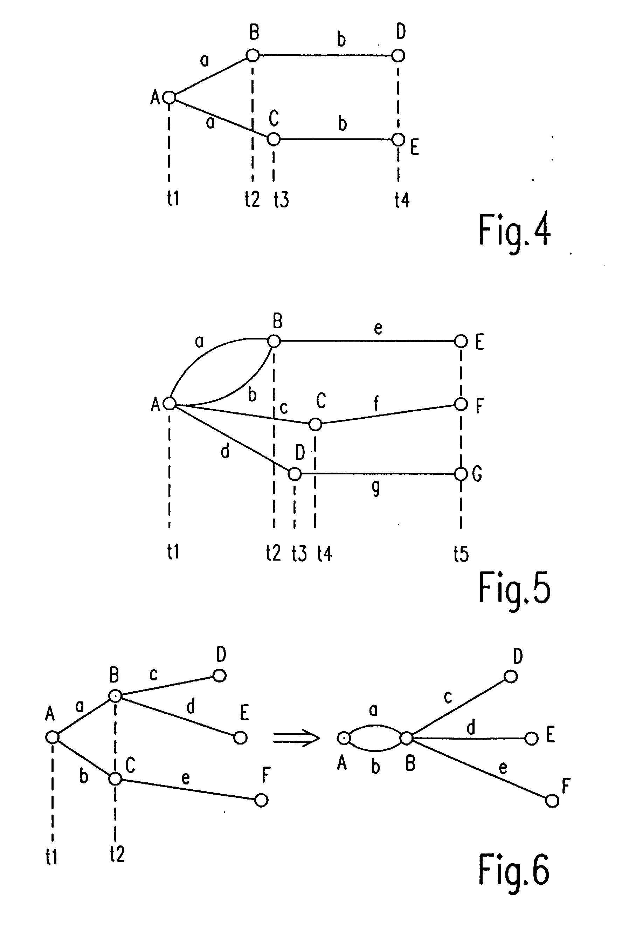

Verschiedene Möglichkeiten zur Vereinfachung bzw. Eliminierung von Wortketten entsprechend einer Optimierung eines Graphen werden anhand der nachfolgenden Figuren erläutert. In Fig. 4 ist der Fall betrachtet, daß zwei Teile von verschiedenen Wortketten gleich sind. Bei dem Beispiel in Fig. 4 gehen beide Teile von Wortketten von dem Knoten A zum Zeitpunkt t1 aus, und zwar mit dem Wort a. Bei der Erzeugung der Worthypothesen durch Vergleich von Testsignalen mit Referenzsignalen wird ein Wort häufig mit mehreren Endpunkten erzeugt, und zwar mit entsprechend unterschiedlichen Bewertungswerten, da bei gebunden gesprochene Sprache der Übergang von einem Wort zum nächsten meistens nicht eindeutig ist. Entsprechend ist es möglich, daß ein Wort, das zu etwas unterschiedlichen Zeitpunkten begonnen wurde, zum selben Zeitpunkt endet, wobei ebenfalls unterschiedliche Bewertungswerte auftreten. Bei dem Beispiel in Fig. 4 tritt in beiden Teilen der Wortkette die gleiche Wortfolge a, b auf, und zwar zum einen über den Knoten B, wobei die Grenze zwischen beiden Worten zum Zeitpunkt t2 angenommen wird, und zum anderen über den Knoten C, wobei die Grenze zwischen beiden Wörtern zum Zeitpunkt t3 angenommen wird. In beiden Fällen endet das Wort b im Knoten D bzw. E zum Zeitpunkt t4, jedoch mit unterschiedlichen Summen der Bewertungswerte, verursacht durch die verschiedene Grenze zwischen den beiden Wörtern. Wenn angenommen wird, daß beim Knoten E die Summe der Bewertungswerte größer ist als beim Knoten D, ist es sicher, daß jede Fortsetzung vom Knoten E keinen besseren Bewertungswert als jede Fortsetzung vom Knoten D erreichen kann, und deshalb wird die Kante vom Knoten C zu E, d.h. das betreffende Wort b gelöscht. Der vollständige Teil der Wortkette vom Knoten A über den Knoten C bis zum Knoten E kann noch nicht gelöscht werden, da es zunächst noch möglich ist, daß der Knoten C mit einem anderen Wort fortgesetzt wird. Erst wenn feststeht, daß die Vergleiche mit allen Folgen von Referenzsignalen, die unmittelbar nach dem Knoten C begonnen wurden, abgeschlossen sind und der Knoten C dabei nicht mehr mit einem Wort fortgesetzt wird, kann auch das Wort A der Kante vom Knoten A zum Knoten C gelöscht werden. Beim Löschen eines Wortes muß dann der Hinweis auf dieses Wort in jedem vorhergehenden Wort und jedem gleichzeitig begonnenen Wort, d.h. bei jedem eventuell ebenfalls vom Knoten C ausgehenden Wort, gelöscht werden.

Ein weiterer Schritt, den Wortgraphen zu vereinfachen bzw. zu optimieren, besteht in einem Schwellwertvergleich. Dazu wird Fig. 5 betrachtet. Vom Knoten A zum Zeitpunkt tl gehen zunächst zwei Kanten bzw. Wörter a und b zum Knoten B zum Zeitpunkt t2. Vom Knoten B geht eine Kante e zum Knoten E zum Zeitpunkt t5. Ferner geht vom Knoten A die Folge der Wörter c und. f über den Knoten C beim Zeitpunkt t4 zum Knoten F, und außerdem die Folge der Wörter d und g über den Knoten D beim Zeitpunkt t3 bis zum Knoten G, wobei die Knoten E, F und G alle zum selben Zeitpunkt t5 gehören. Für alle Wortfolgen ergeben sich in den Knoten E, F und G allgemein unterschiedliche Bewertungswerte, wobei für den Weg vom Knoten A zum Knoten B der günstigere der beiden Bewertungswerte für a und b verwendet wird. Alle drei Bewertungswerte in den Knoten E, F und G werden miteinander verglichen, und wenn ein Bewertungswert um einen Schwellwert größer ist als der günstigste dieser Bewertungswerte, wird das betreffende zugehörige Wort gelöscht, beispielsweise das Wort g. Das Wort d kann aus den gleichen Gründen wie bei Fig. 4 erläutert noch nicht gelöscht werden. Dies kann ebenfalls erst geschehen, wenn alle unmittelbar nach dem Knoten D begonnenen Wörter abgeschlossen sind und feststeht, daß der Knoten D nicht anders als mit dem Wort g fortgesetzt wird. Zu diesem Zeitpunkt, der allgemein nach dem Zeitpunkt t5 liegen wird, kann dann auch unter diesen Voraussetzungen die Kante bzw. das Wort d gelöscht werden.

Entsprechend kann, wenn alle nach dem Knoten B begonnenen Wörter abgeschlossen sind und beispielsweise der Knoten B nur mit dem Wort e fortgesetzt wird, geprüft werden, ob der Weg über das ungünstigere der beiden Wörter a und b beim Knoten E einen Bewertungswert erzeugt, der die Schwelle überschreitet. In diesem Falle kann dann das ungünstigere der beiden Wörter, beispielsweise Wort b, ebenfalls gelöscht werden, so daß nur das Wort a zwischen den Knoten A und B übrig bleibt.

Für den Vergleich mit dem Schwellwert können unmittelbar die Summen der Bewertungswerte der Wörter verwendet werden, es können jedoch auch an den Wortübergängen in den Knoten B, C und D noch Sprachmodellwerte berücksichtigt werden, die beispielsweise von der Kombination der Wörter a, wenn dieses das günstigere ist, und Wort e bzw. von der Kombination der Wörter c und f bzw. von der Kombination der Wörter d und g abhängen.

In Fig. 5 ist angenommen, daß die verschiedenen Wörter e, f und g, die alle zum Zeitpunkt t5 enden, in getrennten Knoten E, F und G münden. Solche gleichzeitigen Knoten können auch zusammengelegt werden, und zwar auch noch rückwirkend, um die Darstellung des Graphen zu vereinfachen. In Fig. 6 ist der Fall angenommen, daß vom Knoten A zum Zeitpunkt t1 zwei Wörter a und b ausgehen, wobei das Wort a zum Knoten B verläuft und sich dort mit den Wörtern c und d zu den Knoten D und E fortsetzt. Das Wort b verläuft zum Knoten C mit demselben Zeitpunkt t2 wie Knoten B, und es setzt sich mit dem Wort e fort zum Knoten F. Die Knoten B und C werden nun zusammengelegt, und es entsteht eine Struktur wie in Fig. 6 rechts dargestellt, wo also beide Wörter a und b zum Knoten B verlaufen und von diesem Knoten aus alle drei Wörter c, d und e sich fortsetzen. Durch das Wegfallen des Knotens C ergibt sich eine vereinfachte Struktur des Graphen bzw. der Wortketten, die sich einfacher in der Datenverkettung darstellen läßt.

Grundsätzlich sind auch andere Maßnahmen zur Optimierung des Wortgraphen bzw. der Wortketten möglich, beispielsweise anstelle der Erzeugung von einer minimalen Anzahl von möglichen Pfaden durch den Wortgraphen wie gemäß Fig. 6 kann es auch zweckmäßig sein, die Anzahl der Knoten oder Kanten im Graphen zu minimieren.

Aus den schließlich entstehenden Wortketten entsprechend dem optimierten Wortgraphen wird dann die Wortkette mit dem günstigsten Bewertungswert ausgewählt, wobei dann für die verschiedenen möglichen Wege durch den Wortgraphen ein eigener End-Bewertungswert aus den Bewertungswerten der einzelnen Wörter und unter Berücksichtigung eines komplexen Sprachmodells bestimmt wird, und für den Weg mit dem optimalen Bewertungswert werden dann die Wörter vom Anfangsknoten beginnend nacheinander ausgegeben. Das komplexe Sprachmodell wird dann also erst angewendet, wenn nur noch eine möglichst geringe Anzahl von Wörtern bzw. Kanten im Graphen oder Wege durch den Graphen vorhanden sind, denn dann erfordert die Anwendung des Sprachmodells nur noch sehr wenig Aufwand.

## Patentansprüche

1. Verfahren zum Ermitteln einer Folge von Wörtern aus einem vorgegebenen Vokabular in einem Sprachsignal mit folgenden Schritten:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Bewertungswerten durchgeführt, wobei jede Folge von Referenzsignalen ein Wort des Vokabulars darstellt;
der Vergleich wird, ausgehend vom Anfang von Folgen von Referenzsignalen, mit folgenden Testsignalen immer wieder neu begonnen;
für jedes erreichte Wortende wird ein Wortergebnis abgeleitet, das wenigstens einen Hinweis auf den Wortanfang dieses beendeten Worts, einen Wort-Bewertungswert und einen Hinweis auf dieses beendete Wort umfaßt;
mindestens eine Folge von Wörtern wird aus den Wortergebnissen abgeleitet und die Wörter vom Beginn an nacheinander ausgegeben;
dadurch gekennzeichnet, daß jeder mit dem Anfang von Folgen von Referenzsignalen neu begonnene Vergleich unabhängig von jedem anderen Vergleich getrennt bis zum Wortende durchgeführt wird,
daß mit den Wortergebnissen der Wortenden vorläufige Wortketten gebildet und diese gespeichert werden, indem jedes bei einem momentanen Testsignal beendete Wort jedem seinem Wortanfang unmittelbar vorhergehenden Ende einer vorläufigen Wortkette zur Bildung einer neuen vorläufigen Wortkette angefügt wird, wobei der Wort-Bewertungswert jedes Worts mit dem am Ende der vorläufigen Wortkette erreichten Bewertungswert zu einem neuen Bewertungswert verknüpft wird, von denen der günstigste neue Bewertungswert für einen Anfangs-Bewertungswert für einen unmittelbar danach neu beginnenden Vergleich dient, der vom Anfang der verschiedenen Folgen von Referenzsignalen ausgeht.

2. Verfahren nach Anspruch 1,
dadurch gekennzeichnet, daß für jede neue vorläufige Wortkette geprüft wird, ob wenigstens ein Teil dieser Wortkette mit einem Teil einer anderen vorläufigen Wortkette, wobei die Teile bei demselben Testsignal begonnen und beendet wurden, bezüglich der Wortfolge identisch ist, und von identischen Teilen alle zuletzt beendeten Wörter außer dem zuletzt beendeten Wort der vorläufigen Wortkette mit dem günstigsten Bewertungswert gelöscht werden.

3. Verfahren nach Anspruch 1 oder 2,
dadurch gekennzeichnet, daß von allen neuen vorläufigen Wortketten, deren Bewertungswert um mehr als ein vorgegebener Schwellwert ungünstiger ist als der beste Bewertungswert aller vorläufigen Wortketten, die bei dem momentanen Testsignal vorläufig enden, das angefügte Wort gelöscht wird.

4. Verfahren nach Anspruch 3,
dadurch gekennzeichnet, daß für den Vergleich mit dem Schwellwert ein weiterer Bewertungswert verwendet wird, der aus einer Verknüpfung des neuen Bewertungswerts und einem Sprachmodell-Bewertungswert gebildet wird, der gemäß der Kombination des betreffenden beendeten Worts und wenigstens des letzten Worts der vorläufigen Wortkette, an die das betreffende beendete Wort angefügt wird, aus einem ersten Satz vorgegebener Sprachmodell-Bewertungswerte ausgewählt wird.

5. Verfahren nach einem der vorhergehenden Ansprüche
dadurch gekennzeichnet, daß für jeden neu begonnenen Vergleich der günstigste Bewertungswert am Ende der vorhergehenden Wortkette mit einem Korrekturwert verknüpft wird.

6. Verfahren nach einem der vorhergehenden Ansprüche,
dadurch gekennzeichnet, daß bei demselben Testsignal endende Wörter ein gemeinsames Ende von vorläufigen Wortketten bilden und die aus dem unmittelbar nach diesem Ende neu begonnenen Vergleich entstehende endende Wörter diesem gemeinsamen Ende angefügt werden, und daß für Wortketten, in denen mehrere Zwischenwörter oder Zwischenwortfolgen bei demselben einen Testsignal begonnen und bei demselben anderen Testsignal beendet wurden, wobei der nach diesem anderen Testsignal neu begonnene Vergleich nicht mit wenigstens einer Folge von Referenzsignalen noch fortgesetzt wird, für jedes dieser Zwischenwörter oder Zwischenwortfolgen zumindest die Wort-Bewertungswerte bis zum zuletzt beendeten Wort zu einem Zwischen-Bewertungswert verknüpft werden und das Zwischenwort bzw. die Zwischenwortfolge gelöscht wird, wenn der Zwischen-Bewertungswert den Schwellwert überschreitet.

7. Verfahren nach einem der vorhergehenden Ansprüche,
dadurch gekennzeichnet, daß jeder Teil einer Wortkette, an dessen Ende nicht wenigstens ein Wort angefügt ist und bei dem der nach diesem Ende neu begonnene Vergleich mit nicht wenigstens einer Folge von Referenzsignalen fortgesetzt wird, gelöscht wird.

8. Verfahren nach einem der vorhergehenden Ansprüche,
dadurch gekennzeichnet, daß spätestens am Ende des Sprachsignals für alle nicht gelöschten Wortketten aus den Wort-Bewertungswerten der Wörter in jeder Kette und Sprachmodell-Bewertungswerten, die für zusammenhängende Teile der Wortketten aus einem zweiten Satz vorgegebener Sprachmodellwerte entnommen werden, End-Bewertungswerte bestimmt werden und die Wörter zumindest der Wortkette mit dem günstigsten End-Bewertungswert von Beginn dieser Kette an nacheinander ausgegeben werden.

9. Verfahren nach einem der vorhergehenden Ansprüche,
dadurch gekennzeichnet, daß beim Ausgeben der Wörter einer Wortkette vom Beginn an für verschiedene Wörter innerhalb dieser Wortkette eines von mehreren diesem Wort folgenden, bei der Bildung der vorläufigen Wortketten angefügten und nicht gelöschten Wörter auswählbar sind und die ausgegebene Wortkette in jedem solchen Fall mit dem ausgewählten Wort fortgesetzt wird, wobei die auswählbaren Wörter in der Reihenfolge der Bewertungswerte, die die bisher ausgegebene Wortkette einschließlich der auswählbaren Wörter ergeben, ausgegeben werden.

10. Verfahren nach Anspruch 9,
dadurch gekennzeichnet, daß nach Auswahl eines anderen Worts neue End-Bewertungswerte ermittelt werden, die mindestens von dem ausgewählten Wort ausgehen, und nachfolgend die Wörter derjenigen Wortkette, die von diesem ausgewählten Wort ausgehend den günstigsten End-Bewertungswert ergibt, nacheinander ausgegeben werden.

11. Anordnung zur Durchführung des Verfahrens nach einem der vorhergehenden Ansprüche, mit
Mitteln zum Aufnehmen eines akustischen Signals und zum Erzeugen einer Folge von Testsignalen,
Mitteln zum Speichern von Folgen von Referenzsignalen, die Wörtern entsprechen,
Mitteln zum Vergleichen der Folgen von Testsignalen mit den Folgen von Referenzsignalen,
Mitteln zum Erzeugen von Wortergebnissen, die Bewertungswerte und Hinweisdaten umfassen, und Mitteln zum Ausgeben wenigstens einer Folge von Wörtern,
gekennzeichnet durch
Mittel zum Erzeugen von vorläufigen Wortketten aus den Wortergebnissen,
Mittel zum Speichern der vorläufigen Wortketten,
Mittel zum Vergleichen der gespeicherten vorläufigen Wortketten miteinander und zum Vergleichen der Bewertungswerte der gespeicherten vorläufigen Wortketten mit einem Schwellwert und zum Löschen wenigstens der letzten Wörter von gespeicherten vorläufigen Wortketten in Abhängigkeit von dem Ergebnis des Vergleichs.

12. Anordnung nach Anspruch 11,
gekennzeichnet durch
Mittel zum Empfangen eines ersten Steuersignals und zum Ausgeben von mehreren Wörtern aus Wortketten als Reaktion auf das erste Steuersignal,
Mittel zum Empfangen eines zweiten Steuersignals und zum Auswählen eines von den mehreren ausgegebenen Wörtern.

## Claims

1. A method of determining a sequence of words of a predetermined vocabulary in a speech signal, comprising the steps of:
sampling the speech signal at recurrent instants so as to produce a sequence of test signals;
signal-wise comparing the test signals with different sequences of reference signals while generating scores, each sequence of reference signals representing a word of the vocabulary, the comparison always commencing anew with subsequent test signals, starting from the beginning of sequences of reference signals;
deriving, for each word end reached, a word result which comprises at least a reference to the beginning of the ended word, a word score, and a reference to the ended word;
deriving at least one sequence of words from the word results, and outputting the words successively from the beginning,
characterized in that each comparison commencing anew with the beginning of sequences of reference signals is separately carried out as far as the word end, independently of any other comparison,
that preliminary word strings are formed, so as to be stored, by means of the word results of the word ends by joining each word which ends at an instantaneous test signal to each preliminary word string which ends directly preceding the beginning of the relevant word ending at said instantaneous test signal in order to form a new preliminary word string, the word score of each word being combined with the score reached at the end of the preliminary word string so as to form a new score, the most favorable new score being used as the initial score for a comparison newly started immediately thereafter, beginning with the different sequences of reference signals.

2. A method as claimed in Claim 1,
characterized in that for each new preliminary word string it is checked whether at least a part of this word string is identical, in respect of word order, to a part of another preliminary word string, the parts having started and ended at the same test signal, all words ended last of identical parts being erased with the exception of the last word ended of the preliminary word string with the most favorable score.

3. A method as claimed in Claim 1 or 2,
characterized in that the joined word of all new preliminary word strings whose score is less favorable than the best score of all preliminary word strings preliminarily ending at the instantaneous test signal by more than a predetermined threshold value is erased.

4. A method as claimed in Claim 3,
characterized in that for the comparison with the threshold value use is made of a further score which is formed by a combination of the new score and a language model score which is selected, in conformity with the combination of the relevant ended word and at least the last word of the preliminary word string whereto the relevant ended word is added, from a first set of predetermined language model scores.

5. A method as claimed in one of the preceding Claims,
characterized in that for each newly started comparison the most favorable score at the end of the preceding word string is combined with a correction value.

6. A method as claimed in one of the preceding Claims,
characterized in that words ending at the same test signal form a common end of preliminary word strings, and that the ending words arising from the comparison newly started immediately after said end are joined to said common end, and that for word strings in which several intermediate words or intermediate word sequences have started at the same test signal and have ended at the same other test signal, and where the comparison newly started after said other test signal is not continued further with at least one sequence of reference signals, for each of these intermediate words or intermediate word sequences at least the word scores up to the word ended last are combined to form an intermediate score, the intermediate word or the intermediate word sequence being erased when the intermediate score exceeds the threshold value.

7. A method as claimed in one of the preceding Claims,
characterized in that each part of a word string with an end whereto not at least one word has been added and at which the comparison, newly started after this end, is not continued with at least one sequence of reference signals is erased.

8. A method as claimed in any one of the preceding Claims,
characterized in that, at least at the end of the speech signal, end scores are determined, for all non-erased word strings, from the word scores of the words in each string and from language model scores derived, for coherent parts of the word strings, from a second set of predetermined language model values, the words of at least the word string having the most favorable end score being successively output as from the beginning of this string.

9. A method as claimed in one of the preceding Claims,
characterized in that, during output of the words of a word string as from the beginning, for different words within this word string, one of a plurality of words which succeed the relevant word, have been joined during formation of the preliminary word strings, and have not been erased, can be selected, the word string output in all such cases being continued with the selected word in such a case, the selectable words in the sequence of the scores producing the word string output thus far, including the selectable words, then, being output.

10. A method as claimed in Claim 9,
characterized in that new end scores are determined after selection of another word, which new end scores emanate at least from the selected word, after which the words of the word string emanating from this selected word and offering the most favorable end score are successively output.

11. A device for carrying out the method claimed in one of the preceding Claims, comprising
means for picking up an acoustic signal and for generating a sequence of test signals,
means for storing sequences of reference signals corresponding to words,
means for comparing the sequences of test signals with the sequences of reference signals,
means for generating word results which comprise scores and reference data, and
means for outputting at least one sequence of words,
characterized in that there are provided
means for generating preliminary word strings from the word results,
means for storing the preliminary word strings,
means for comparing the stored preliminary word strings with one another and for comparing the scores of the stored preliminary word strings with a threshold value and for erasing at least the last words of stored preliminary word strings in dependence on the result of the comparison.

12. A device as claimed in Claim 11,
characterized in that it comprises
means for receiving a first control signal and for outputting a plurality of words from word strings in response to the first control signal, and
means for receiving a second control signal and for selecting one of the plurality of words output.

## Revendications

1. Procédé de détermination d'une séquence de mots à partir d'un vocabulaire préalablement défini dans un signal de parole présentant les étapes suivantes :
à des moments répétés, le signal de parole est lu pour générer une séquence de signaux de test; une comparaison par signal entre les signaux de tête et différentes séquences de signaux de référence est effectuée avec production de valeurs d'évaluation, chaque séquence des signaux de référence représentant un mot du vocabulaire, la comparaison est recommencée à partir du début des différentes séquences de signaux de référence avec les signaux de test suivants ; pour chaque fin de mot atteinte, un résultat de mot est dérivé et comprend au moins une indication sur le début du mot de ce mot terminé, une valeur d'évaluation du mot et une indication de ce mot terminé ; au moins une séquence de mots est dérivée des résultats de mot et les mots sont sortis successivement depuis le début,
caractérisé en ce que chaque comparaison commencée par le début de séquences de signaux de référence est effectuée séparément, indépendamment de toute autre comparaison jusqu'à la fin du mot ;
que des chaînes de mots provisoires sont formées avec les résultats de mots des fins de mot et celles-ci sont enregistrées, chaque mot terminé par un signal de test instantané étant ajouté à chaque fin d'une chaîne de mot provisoire précédant immédiatement son début de mot en vue de la formation d'une nouvelle chaîne de mots provisoire, la valeur d'évaluation de chaque mot étant associée à la valeur d'évaluation atteinte à la fin de la chaîne de mots provisoire en une nouvelle valeur d'évaluation, la nouvelle valeur d'évaluation la plus avantageuse pour une valeur d'évaluation initiale servant à une comparaison commençant immédiatement ensuite qui part du début des différentes séquences de signaux de référence.

2. Procédé selon la revendication 1,
caractérisé en ce que, pour chaque nouvelle chaîne de mots provisoire, on vérifie si au moins une partie de cette chaîne de mots est identique à une partie d'une autre chaîne de mots provisoire sur le plan de la séquence de mots, les parties ayant commencé et se terminant par le même signal de test et, parmi les parties identiques, tous les mots terminés en dernier lieu, hormis le mot terminé en dernier lieu de la chaîne de mots provisoire avec la valeur d'évaluation la plus avantageuse, étant effacés.

3. Procédé selon l'une des revendications 1 ou 2,
caractérisé en ce que, parmi toutes les nouvelles chaînes de mots provisoires dont la valeur d'évaluation est plus défavorable de plus d'une valeur-seuil prédéterminée que la meilleure valeur d'évaluation de toutes les chaînes de mots provisoires qui se terminent provisoirement au signal de test instantané, le mot ajouté est effacé.

4. Procédé selon la revendication 3,
caractérisé en ce que, pour la comparaison avec la valeur-seuil, une valeur d'évaluation supplémentaire est utilisée et est formée d'une liaison de la nouvelle valeur d'évaluation et d'une valeur d'évaluation du modèle de parole qui est sélectionnée, conformément à la combinaison du mot terminé correspondant et au moins du dernier mot de la chaîne de mots provisoire auquel le mot terminé correspondant est ajouté à partir d'une première série de valeurs d'évaluation de modèle de parole préalablement définies.

5. Procédé selon l'une des revendications précédentes,
caractérisé en ce que, pour chaque comparaison nouvellement commencée, la valeur d'évaluation la plus avantageuse est associée à la fin de la chaîne de mot précédente à une valeur de correction.

6. Procédé selon l'une des revendications précédentes,
caractérisé en ce que les mots se terminant par le même signal de test forment une fin commune de chaînes de mots provisoires et les mots se terminant formés à partir de la comparaison commencée immédiatement après cette fin sont ajoutés à cette fin commune et que, pour les chaînes de mots dans lesquelles plusieurs mots intermédiaires ou séquences de mots intermédiaires ont commencé par le même signal de test et ont été terminés par le même autre signal de test, la comparaison recommencée après cet autre signal de test n'étant pas encore suivie avec au moins une séquence de signaux de référence, les valeurs d'évaluation de mots pour le moins, jusqu'au mot terminé en dernier lieu, sont associées à une valeur d'évaluation intermédiaire pour chacun de ces mots intermédiaires ou séquences de mots intermédiaires et le mot intermédiaire ou la séquence de mots intermédiaire est effacé lorsque la valeur d'évaluation intermédiaire dépasse la valeur-seuil.

7. Procédé selon l'une des revendications précédentes,
caractérisé en ce que chaque partie d'une chaîne de mot à une extrémité de laquelle n'est pas ajouté au moins un mot et pour laquelle la comparaison recommencée après cette fin n'est pas poursuivie avec au moins une séquence de signaux de référence est effacée.

8. Procédé selon l'une des revendications précédentes, caractérisé en ce qu'au plus tard à la fin du signal de parole, des valeurs d'évaluation finales sont déterminées pour toutes les chaînes de mots non effacées à partir des valeurs d'évaluation des mots dans chaque chaîne et des valeurs d'évaluation de modèle de parole qui sont prélevées pour des parties cohérentes des chaînes de mots à partir d'une deuxième série de valeurs de modèle de parole préalablement définies et les mots sont sortis successivement du moins de la chaîne de mots avec la valeur d'évaluation finale la plus avantageuse à partir du début de cette chaîne.

9. Procédé selon l'une des revendications précédentes,
caractérisé en ce que lors de la sortie des mots d'une chaîne de mots, un des plusieurs mots non effacés, suivant ce mot et ajoutés lors de la formation des chaînes de mots provisoires peut être sélectionné lors de la sortie des mots d'une chaîne de mots depuis le début pour différents mots au sein de cette chaîne de mots et la chaîne de mots sortie est en tout cas poursuivie par le mot sélectionné, les mots susceptibles d'être sélectionné étant sortis dans l'ordre des valeurs d'évaluation qui produisent la chaîne de mots sortie jusqu'à présent, y compris les mots susceptibles d'être sélectionnés.

10. Procédé selon la revendication 9,
caractérisé en ce qu'après la sélection d'un autre mot, de nouvelles valeurs d'évaluation finales sont déterminées et se basent au moins sur le mot sélectionné et, ensuite, les mots de la chaîne de mots qui découle de ce mot sélectionné à partir de la valeur d'évaluation finale la plus avantageuse sont sortis successivement.

11. Dispositif de mise en oeuvre du procédé selon l'une des revendications précédentes avec
des moyens d'enregistrement d'un signal acoustique et de production d'une séquence de signaux de test,
des moyens d'enregistrement de séquences de signaux de référence qui correspondent à des mots,
des moyens de comparaison des séquences de signaux de test avec les séquences de signaux de référence,
des moyens de production de résultats de mots qui comprennent des valeurs d'évaluation et des données indicatives et
des moyens de sortie d'au moins une séquence de mots
caractérisé par
des moyens de production de chaînes de mots provisoires à partir des résultats de mots,
des moyens d'enregistrement de chaînes de mots provisoires,
des moyens de comparaison des chaînes de mots provisoires enregistrées entre elles et de comparaison des valeurs d'évaluation des chaînes de mots provisoires enregistrées avec une valeur-seuil et d'effacement d'au moins les derniers mots de chaînes de mots provisoires enregistrées en fonction du résultat de la comparaison.

12. Dispositif selon la revendication 11,
caractérisé par
des moyens de réception d'un premier signal de commande et de sortie de plusieurs mots à partir de chaînes de mots en réaction au premier signal de commande,
des moyens de réception d'un deuxième signal de commande et de sélection d'un des plusieurs mots sortis.
